(19) Europäisches Patentamt
European Patent Office
Office européen des brevets

(11) **EP 3 006 859 A1**

(12) **EUROPEAN PATENT APPLICATION**
published in accordance with Art. 153(4) EPC

(43) Date of publication:
**13.04.2016 Bulletin 2016/15**

(21) Application number: **13886330.3**

(22) Date of filing: **06.06.2013**

(51) Int Cl.:
*F25B 1/00* (2006.01)        *F25B 45/00* (2006.01)

(86) International application number:
**PCT/JP2013/065643**

(87) International publication number:
**WO 2014/196045 (11.12.2014 Gazette 2014/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Mitsubishi Electric Corporation Tokyo 100-8310 (JP)**

(72) Inventors:
• **KATO, Yohei**
  **Tokyo 100-8310 (JP)**
• **AOKI, Masanori**
  **Tokyo 100-8310 (JP)**

(74) Representative: **Pfenning, Meinig & Partner mbB Patent- und Rechtsanwälte Theresienhöhe 11a 80339 München (DE)**

(54) **REFRIGERATION CYCLE DEVICE**

(57)     A refrigeration cycle apparatus 100 includes a compressor 1 and sets a heating-mode lower limit refrigerant volume flow rate in the compressor 1. The heating-mode lower limit refrigerant volume flow rate is a lower limit of a volume flow rate in a heating operation. The apparatus controls a rotation speed of the compressor 1 such that the volume flow rate in the heating operation is greater than or equal to the heating-mode lower limit refrigerant volume flow rate. The heating-mode lower limit refrigerant volume flow rate includes a first lower limit for use of an R41 OA refrigerant and a second lower limit for use of an R32 refrigerant in the refrigeration cycle apparatus 100 designed for the R410A refrigerant. The second lower limit is greater than the first lower limit. In the heating operation in the use of the R32 refrigerant in the refrigeration cycle apparatus 100 designed for the R410A refrigerant, the apparatus performs correction such that the lower limit is increased from the first lower limit to the second lower limit to control the rotation speed of the compressor 1.

FIG. 3

**Description**

Technical Field

The present invention relates to a refrigeration cycle apparatus in which an R32 refrigerant is enclosed and used instead of an R410A refrigerant.

Background Art

In a related-art refrigeration cycle apparatus in which refrigerating machine oil that is immiscible or slightly miscible with refrigerant is used as refrigerating machine oil, a rotation speed of a compressor or an opening degree of an expansion valve is controlled so that the flow velocity of refrigerant flowing through a gas riser pipe, which is a gas pipe for upward flow of the refrigerant, is higher than a flow velocity (zero penetration velocity) at which the oil deposited on an inner wall of the gas pipe is moved upward.

The above-described control of the rotation speed of the compressor or the opening degree of the expansion valve can prevent the refrigerating machine oil from building up inside the gas pipe, thus reliably providing a necessary amount of oil for the compressor. This can protect the compressor from poor lubrication and failure (refer to Patent Literature 1, for example).

Citation List

Patent Literature

Patent Literature 1: Japanese Unexamined Patent Application Publication No. 2001-272117

Summary of Invention

Technical Problem

Examples of refrigerants generally used currently include R410A. This refrigerant has, as its features, an ozone depletion potential of zero and a global warming potential of 2090, which is still a high level. Attention is accordingly being given to R32 that has an ozone depletion potential of zero and a global warming potential of 675, approximately one-third of that of R410A. Furthermore, R32 has physical properties, such as the relationship between the saturation temperature and the saturation pressure, close to those of R410A. This enables R32 to be enclosed and used in a refrigeration cycle apparatus designed for R410A, or enables replacement of refrigerants.

If refrigerant is changed from R410A to R32, however, the zero penetration velocity, serving as a gas refrigerant velocity determined in consideration of oil returnability based on refrigerant used, will also change. Disadvantageously, the refrigeration cycle apparatus designed for R410A fails to ensure good oil returnability in, particularly, an upward gas refrigerant passage.

The present invention has been made to overcome the above-described disadvantage and aims to provide a refrigeration cycle apparatus designed for R41 OA configured such that in replacement of R41 OA by R32 as refrigerant, a lower limit volume flow rate in a compressor is changed to ensure good oil returnability in an upward gas refrigerant passage.

Solution to Problem

The present invention provides a refrigeration cycle apparatus including a variable displacement compressor and pipes designed for R410A. The apparatus sets a heating-mode lower limit refrigerant volume flow rate in the compressor. The heating-mode lower limit refrigerant volume flow rate is a lower limit of a volume flow rate in a heating operation. The apparatus controls a rotation speed of the compressor such that the volume flow rate in the heating operation is greater than or equal to the heating-mode lower limit refrigerant volume flow rate. The heating-mode lower limit refrigerant volume flow rate includes a first lower limit for use of an R41 OA refrigerant and a second lower limit for use of an R32 refrigerant in the refrigeration cycle apparatus designed for the R410A refrigerant. The second lower limit is greater than the first lower limit. In the heating operation in the use of the R32 refrigerant in the refrigeration cycle apparatus designed for the R410A refrigerant, the apparatus performs correction such that the lower limit is increased from the first lower limit to the second lower limit to control the rotation speed of the compressor.

Advantageous Effects of Invention

According to the present invention, in replacement of R410A by R32 as refrigerant in the refrigeration cycle apparatus designed for R410A, the lower limit volume flow rate in the heating operation is changed, so that good oil returnability in an upward gas refrigerant passage can be ensured. This can protect the compressor from poor lubrication and failure.

Brief Description of Drawings

[Fig. 1] Fig. 1 is a diagram illustrating the configuration of a refrigeration cycle apparatus 100 designed for R410A according to the present invention.
[Fig. 2] Fig. 2 is a comparison graph illustrating the difference in physical properties between R410A and R32 related to the present invention.
[Fig. 3] Fig. 3 is a comparison graph illustrating the relationship between the saturation temperature and a compressor lower limit frequency associated with the zero penetration velocity of each of R410A and R32 in Embodiment 1 of the present invention.
[Fig. 4] Fig. 4 is a graph illustrating the ratio of a gas refrigerant density of R32 to that of R410A in the present invention.
[Fig. 5] Fig. 5 is a diagram illustrating the relationship between the zero penetration velocity and the diameter of each of pipes in Embodiment 1 of the present invention.
[Fig. 6] Fig. 6 is a comparison graph illustrating the relationship between the saturation temperature and a compressor lower limit volume flow rate associated with the zero penetration velocity of each of R410A and R32 in Embodiment 1 of the present invention.
[Fig. 7] Fig. 7 is a comparison graph illustrating the relationship between the ratio of the density of a mixture of R32 and a refrigerating machine oil to the density of a mixture of R41 OA and a refrigerating machine oil and the ratio of an increase in lower limit frequency in use of R32 to that in use of R410A in Embodiment 2 of the present invention.
[Fig. 8] Fig. 8 is a graph illustrating the ratio of the densities of oils at which the zero penetration velocity is achieved in the use of R32 in Embodiment 3 of the present invention.
[Fig. 9] Fig. 9 is a comparison graph illustrating the relationship between the saturation temperature and the compressor lower limit volume flow rate associated with the zero penetration velocity of each of R410A and R32 in Embodiment 4 of the present invention.

Description of Embodiments

Embodiments of the present invention will be described with reference to the drawings. Embodiments which will be described below should not be construed as limiting the present invention.

Embodiment 1

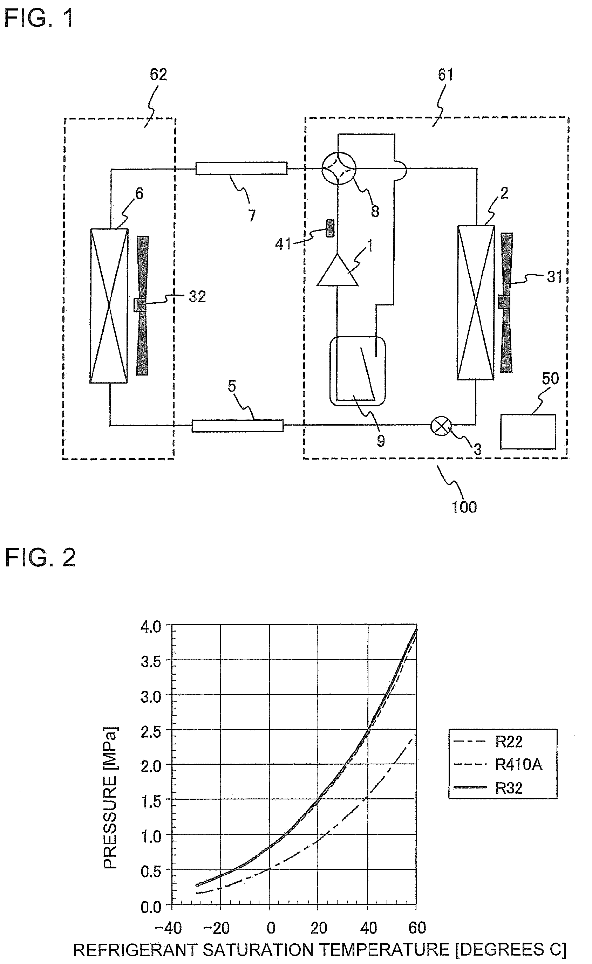

Fig. 1 is a diagram illustrating the configuration of a refrigeration cycle apparatus 100 designed for R41 OA. Referring to Fig. 1, an outdoor unit 61 is connected to an indoor unit 62 by a liquid pipe 5 and a gas pipe 7. The outdoor unit 61 includes a compressor 1, an outdoor heat exchanger 2, an expansion valve 3 having a variable opening degree, an accumulator 9, serving as a refrigerant container, and a four-way valve 8 which are connected by pipes. The outdoor unit 61 further includes a discharge temperature sensor 41, serving as a compressor outlet temperature unit, and a control board 50 that controls the compressor 1, the expansion valve 3, and an outdoor fan 31. The indoor unit 62 includes an indoor heat exchanger 6, an indoor fan 32, and a control board (not illustrated) that controls the indoor fan. The control board 50 includes a storage unit for storing a discharge temperature detected by the discharge temperature sensor 41, the opening degree of the expansion valve 3, and a rotation speed of the compressor 1, a calculation unit for calculating the opening degree of the expansion valve 3 and the rotation speed of the compressor 1, and a control unit for controlling the opening degree of the expansion valve 3 and the rotation speed of the compressor 1.
Fig. 2 is a comparison graph illustrating the difference in physical properties between R41 OA and R32 in Embodiment 1 of the present invention. In comparison between the saturation pressure plotted against the refrigerant saturation temperature of R410A and that of R32, an increase in pressure of R32 relative to the pressure of R410A at each saturation temperature is small (approximately +0.1 Mpa over the entire range). In replacement of R41 OA by R32 as refrigerant, the same specification as that of the refrigeration cycle apparatus designed for R410A can advantageously be used.
The zero penetration velocity, serving as a refrigerant flow velocity limit for oil returnability, will now be described.

In gas pipes, refrigerant and oil flow in a two-phase gas-liquid state. In particular, in upward flow, the flowing state of liquid (oil) changes depending on the flow velocity of gas. A phenomenon occurs in such a manner that when the flow velocity of the gas is high, the liquid is entrained into the gas flow and is accordingly moved upward, and when the flow velocity of the gas decreases, the liquid moves downward along an inner wall of a pipe. A state in which an increased flow velocity of the gas results in a reduction in downward-moving liquid membrane is called "zero penetration". A flow velocity at the time of zero penetration is called a "zero penetration velocity" (hereinafter, "ZP velocity").

If an actual refrigerant flow velocity is higher than the ZP velocity, refrigerating machine oil can be smoothly circulated through a refrigerant circuit and be returned to the compressor 1 without building up in an upward gas refrigerant pipe.

The ZP velocity is typically represented by Expression (1).

[Math. 1]

$$u_G = C \cdot \left( \frac{g \cdot D_h \cdot (\rho_L - \rho_G)}{\rho_G} \right)^{\frac{1}{2}}$$

where

C: correction factor specific to an actual apparatus;
uG: ZP velocity [m/s];
g: gravitational acceleration [m/s$^2$];
Dh: pipe inside diameter [m];
pL: liquid density [kg/m$^3$]; and
pG: gas density [kg/m$^3$].

In this expression, C is the correction factor for the ZP velocity. Since the expression representing the ZP velocity is based on experiments in a water or air system, this factor is obtained in consideration of fluids (the refrigerant and the oil in Embodiment 1) and the shape of an inner surface of a pipe in the actual apparatus.

If the actual refrigerant flow velocity is higher than the ZP velocity given by the above-described expression, therefore, the refrigerating machine oil will be smoothly circulated through the refrigerant circuit and be returned to the compressor without building up in a vertical gas pipe.

The relationship between the ZP velocity and a lower limit frequency of the compressor will now be described.

A method of calculating a compressor frequency at which the actual flow velocity is at or above the ZP velocity will first be described.

A flow rate Qcomp [kg/s] of refrigerant discharged from the compressor is represented by Expression (2) including a stroke volume Vst [cc], the number of revolutions F [r/s], a volumetric efficiency $\eta_v$, and a compressor suction density $\rho$s [kg/m$^3$].

[Math. 2]

$$Q_{comp} = V_{st} \times 10^{-6} \times F \times \eta_v \times \rho_s$$

The flow velocity, ur [m/s], of gas refrigerant passing through a gas pipe having a cross-sectional area Ai (= $\pi$/4 x di$^2$) [m$^2$] in the refrigerant circuit can be given by Expression (3) including the density, pr, of the gas refrigerant in the pipe.

[Math. 3]

$$u_r = \frac{Q_{comp}}{A_i \times \rho_r} = \frac{Q_{comp}}{\frac{\pi}{4} \times d_i^2 \times \rho_r}$$

Expressions (2) and (3) give Expression (4) that represents the relationship between the gas refrigerant flow velocity ur and the number of revolutions F.

[Math. 4]

$$F = \frac{u_r \times A_i}{V_{st} \times 10^{-6} \times \eta_v} \times \frac{\rho_r}{\rho_s}$$

Expressions (1) and (4) give the number of revolutions F of the compressor 1 at the ZP velocity uG. The obtained number of revolutions is a "lower limit frequency F*" of the compressor 1. The lower limit frequency F* or higher allows for good oil returnability in an upward gas pipe.

Expression (4) may be expressed as Expression (5). The left side of Expression (5) represents a volume flow rate [m$^3$/s] through the compressor 1 at the lower limit frequency F* of the compressor 1 and the right side thereof represents a volume flow rate [m$^3$/s] through the pipe.

[Math. 5]

$$F^* \times V_{st} \times 10^{-6} \times \eta_v = u_G \times A_i \times \frac{\rho_G}{\rho_s}$$

The lower limit frequency F* of the compressor 1 is proportional to the ZP velocity uG and the pipe cross-sectional area Ai and is inversely proportional to the stroke volume Vst and the volumetric efficiency $\eta_v$ and is proportional to the ratio of the pipe gas density pG to the compressor suction density ps.

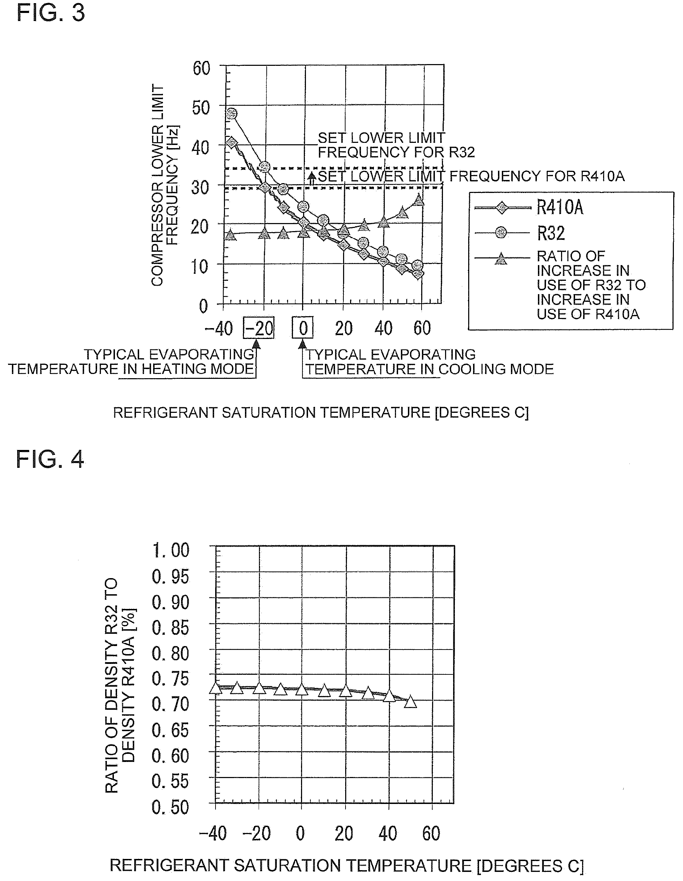

Fig. 3 illustrates the relationship between the refrigerant saturation temperature and the lower limit frequency of the compressor associated with the ZP velocity of each of R41 OA and R32.

Fig. 3 illustrates the results of calculation of the lower limit frequency of the compressor 1 associated with the ZP velocity relative to the refrigerant saturation temperature. The calculation was performed by using Expressions (1) to (5) described above. Fig. 3 also depicts the ratio of an increase in lower limit frequency of the compressor 1 in the use of the R32 refrigerant to that in the use of the R410A refrigerant at each saturation temperature.

Calculation conditions are as follows.

Actual apparatus used: Apparatus designed for R410A

Refrigerants compared: R410A and R32

Compressor stroke volume: 33 cc

Compressor volumetric efficiency: 0.9

Target pipe: Compressor suction-side pipe having a diameter φ of 19.05 Refrigerating machine oil: Common to R410A and R32

Pressure: Saturation temperatures -40 degrees C to 63.6 degrees C

(R41 OA: 0.40 to 4.15 Mpa / R32: 0.41 to 4.25 MPa)

Compressor suction temperature: Saturation temperature + 0.0 K

As is evident from the relationship between the refrigerant saturation temperature and the lower limit frequency of the compressor 1 associated with the ZP velocity of each of R41 OA and R32 in Fig. 3, the lower limit frequency of the compressor 1 associated with the ZP velocity in the use of R32 is higher than that in the use of R410A over the entire range of refrigerant saturation temperatures. This is because R32 has a lower gas refrigerant density than R41 OA as illustrated in Fig. 4 and accordingly requires a higher ZP velocity than R41 OA. The above results demonstrate that it is necessary to set a high lower limit frequency of the compressor 1 in order to ensure good oil returnability if the refrigerant saturation temperature of R32 is the same as that of R410A.

Operation conditions that allow an increase in ZP velocity as well as an increase in lower limit frequency of the compressor 1 will now be described.

As understood from Fig. 3 illustrating the relationship between the refrigerant saturation temperature and the lower limit frequency of the compressor 1 associated with the ZP velocity of each of R410A and R32, the lower the refrigerant saturation temperature, the higher the lower limit rotation speed of the compressor 1. The reason is that as the refrigerant temperature is lower, the refrigerant gas density decreases and the ZP velocity increases (refer to Expression (1)). The lower limit rotation speed of the compressor 1 tends to increase as a low-pressure side refrigerant saturation temperature, that is, an evaporating pressure of an evaporator is lower.

Considering operations throughout the year, these conditions that allow an increase in lower limit rotation speed of the compressor 1 can be true in a heating operation during the winter season during which outdoor air temperature related to an evaporating temperature of the refrigerant decreases. As regards pipes in a refrigerant cycle, as understood from Expression (4), the conditions that allow an increase in lower limit rotation speed include a pipe having a large cross-sectional area Ai.

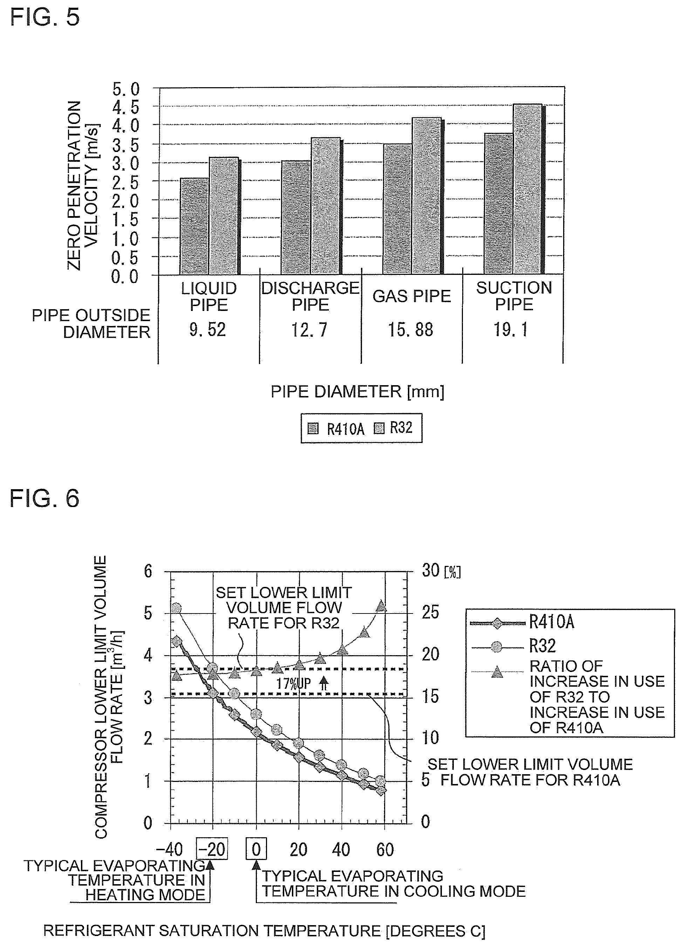

On the basis of the above-described conditions, it is assumed that the outside air temperature is low and the evaporating temperature in the heating operation during the winter season is -20 degrees C. Fig. 5 illustrates ZP velocities in pipes in a refrigeration cycle calculated on the above-described assumption.

Fig. 5 demonstrates that a suction gas pipe connecting to the compressor 1 and having the largest inside diameter among the pipes provides the highest ZP velocity.

In other words, the ZP velocity, or the oil returnability may be evaluated in the suction gas pipe that is a gas pipe through which upward flow is provided in the heating operation, that has the largest inside diameter, and that connects to the compressor 1.

On the above-described assumption, the lower limit frequency of the compressor 1 in the refrigeration cycle apparatus 100 designed for R410A can accordingly be set on the basis of an evaporating temperature of -20 degrees C in the heating operation at which the ZP velocity is high.

A lower limit frequency of the compressor 1 in the use of R32 in the refrigeration cycle apparatus 100 designed for R410A in the heating operation will now be evaluated. As described above, the lower limit frequency of the compressor 1 in the refrigeration cycle apparatus designed for R410A is set on the basis of an evaporating temperature of -20 degrees C in the heating operation at which the ZP velocity is high.

In evaluation based on the relationship between the refrigerant saturation temperature and the lower limit frequency of the compressor 1 associated with the ZP velocity of each of R41 OA and R32 in Fig. 3, the lower limit frequency in the use of R32 is higher than that in the use of R41 OA by approximately 17% at an evaporating temperature of -20 degrees C in the heating operation, as is obvious from Fig. 3.

Furthermore, as is clear from Fig. 3, when the evaporating temperature in a cooling operation is 0 degrees C, the lower limit frequency of the compressor 1 in the cooling operation in the use of R32 is higher than the lower limit frequency (lower limit frequency based on an evaporating temperature of -20 degrees C) in the use of R410A.

Consequently, the lower limit frequency of the compressor 1 in the use of R32 in the refrigeration cycle apparatus designed for R410A may be corrected such that the lower limit frequency is increased only in the heating operation.

Thus, the lower limit frequency of the compressor 1 in the heating operation in the refrigeration cycle apparatus 100 in the use of R32 can be corrected, or increased to be higher than that in the use of R41 OA by approximately 17% or more so that the ZP velocity is achieved, as is evident from Fig. 3.

In addition, as described above, the lower limit frequency of the compressor 1 in the cooling operation in the refrigeration cycle apparatus 100 in the use of R32 does not have to be corrected relative to that in the use of R410A.

As defined in Expression (5), the lower limit volume flow rate through the gas pipe increases in proportion to the increase of the lower limit rotation speed of the compressor 1 associated with the ZP velocity.

Fig. 6 illustrates the results of calculation of the lower limit volume flow rate in the compressor 1 associated with the ZP velocity relative to the refrigerant saturation temperature. The calculation was performed by using Expressions (1) to (5) described above. Fig. 6 also depicts the ratio of an increase in lower limit volume flow rate in the compressor 1 in the use of R32 to that in the use of R41 OA at each refrigerant saturation temperature.

In Fig. 6, the lower limit volume flow rates through the compressor 1 are obtained by simply converting the lower limit frequencies of the compressor 1 associated with the ZP velocities and represented by the axis of ordinates in Fig. 3.

As is evident from the left side of Expression (5) described above, the volume flow rate in the compressor 1 is proportional to the rotation speed of the compressor 1. The rate of correction for the increase of the compressor lower limit frequency accordingly agrees with that for the increase of the lower limit volume flow rate in the compressor 1. In evaluation based on the relationship between the refrigerant saturation temperature and the lower limit volume flow rate in the compressor 1 associated with the ZP velocity of each of R41 OA and R32 in Fig. 6, as is obvious from Fig. 6, the lower limit volume flow rate in the use of R32 is higher than that in the use of R41 OA by approximately 17% at an evaporating temperature of -20 degrees C in the heating operation in a manner similar to Fig. 3.

As described above, the lower limit frequency of the compressor 1, that is, the lower limit volume flow rate in the compressor 1 is set so as to increase in the heating operation, thereby controlling the displacement of the compressor 1. If the density of gas refrigerant is changed from the density of gas refrigerant of R41 OA to that of R32, this control allows the gas refrigerant velocity in the suction gas pipe of the compressor to be maintained at or above the ZP velocity so that the volume flow rate through the gas pipe is increased, thus ensuring good oil returnability of the refrigerating machine oil.

The lower limit frequency of the compressor 1 increases with decreasing outside air temperature. If a frequency required for the heating operation is lower than the lower limit frequency at a low load in the heating operation, the capacity will be excessive, so that the units will enter an intermittent operation to repeat thermo-ON and thermo-OFF. Typically, an operation frequency lower than or equal to the lower limit frequency may be permitted for a predetermined period of time. It is assumed that the refrigerating machine oil is not returned from the cycle during this period of time. After the predetermined period of time during which the operation at a frequency lower than or equal to the lower limit frequency is permitted, the operation at a frequency higher than or equal to the lower limit frequency is continued for a certain period of time to return the oil built up in the refrigeration cycle. Such control can reliably ensure good oil returnability at the low load.

Embodiment 2

In Embodiment 1, when R32 is used in the refrigeration cycle apparatus 100 designed for R410A, the same refrigerating machine oil is used and the lower limit rotation speed of the compressor 1 and the lower limit volume flow rate in the compressor 1 are determined. According to Embodiment 2, different refrigerating machine oils are used for R41 OA and R32 such that the ratio of the density of a mixture of R32 and a refrigerating machine oil is greater than or equal to 90% and less than or equal to 110% of the density of a mixture of R410A and a refrigerating machine oil. Other calculation conditions are the same as those in Embodiment 1.
In Embodiment 2, the lower limit rotation speed of the compressor 1 and the lower limit volume flow rate in the compressor 1 are determined in consideration of the range of densities of refrigerating machine oils typically used for R32.

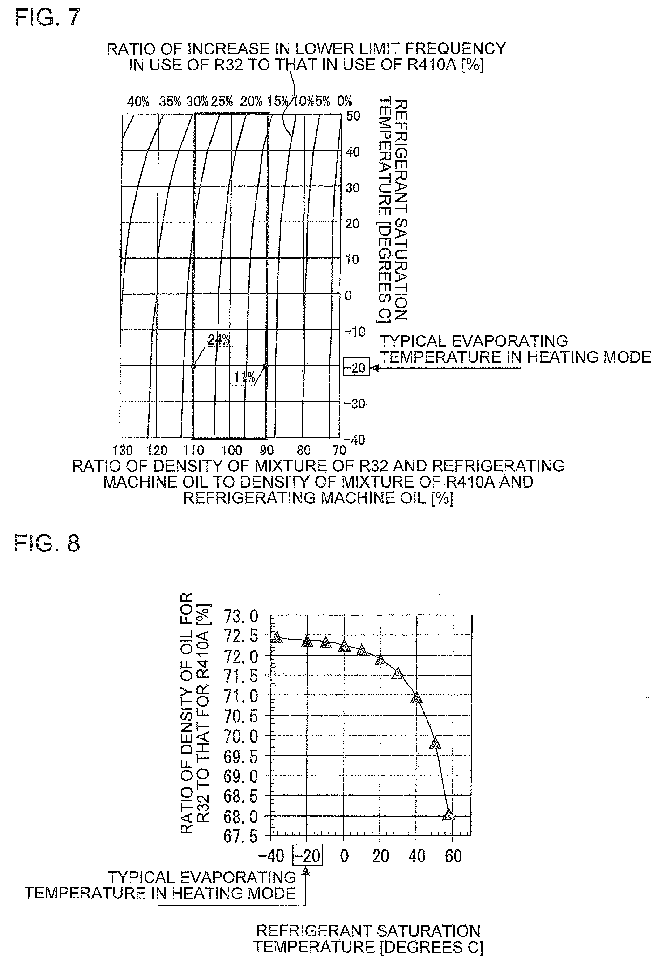

Fig. 7 illustrates the relationship between the ratio of the density of a mixture of R32 and a refrigerating machine oil to the density of a mixture of R410A and a refrigerating machine oil given by Expressions (1) to (5) and the ratio of an increase in lower limit frequency of the compressor in the use of R32 to that in the use of R410A at each saturation temperature.
In Fig. 7, the axis of abscissas represents the ratio of the densities of the mixtures of the refrigerants and refrigerating machine oils and the axis of ordinates represents the refrigerant saturation temperature. In Fig. 7, a thick line indicates a range of 90% to 110% as the ratio of the density of the mixture of R32 and a refrigerating machine oil to the density of the mixture of R410A and a refrigerating machine oil.
A refrigerant saturation temperature of -20 degrees C, serving as an evaporating temperature in the heating operation, is included in conditions for correcting an increase in lower limit frequency of the compressor 1, as in Embodiment 1. As can be seen from the plots in Fig. 7, the lower limit frequency of the compressor 1 in the use of R32 is set to be higher than that in the use of R41 OA by an amount in a range of approximately 11 % to approximately 24%.
As described in Embodiment 1, it is unnecessary to correct the lower limit frequency in the cooling operation in the use of R32 relative to that in the use of R41 OA.
As defined by Expression (5), the lower limit volume flow rate in the compressor 1 increases in proportion to the increase of the lower limit rotation speed of the compressor 1 associated with the ZP velocity.
As described above, the lower limit frequency of the compressor 1, that is, the lower limit volume flow rate in the compressor 1 is set so as to increase in the heating operation, thereby controlling the displacement of the compressor 1. If the density of the refrigerating machine oil is changed from a value for R41 OA to a value for R32, this control allows the gas refrigerant velocity in the suction gas pipe of the compressor to be maintained at or above the ZP velocity so that the volume flow rate through the gas pipe is increased, thus ensuring good oil returnability of the refrigerating machine oil.

Embodiment 3

In Embodiments 1 and 2, the lower limit frequency of the compressor 1 is corrected so as to increase in the heating operation, thereby ensuring good oil returnability. According to Embodiment 3, the refrigerating machine oil is replaced by a refrigerating machine oil having a lower density in order to ensure good oil returnability.
Fig. 8 illustrates the ratio, at which the ZP velocity is achieved relative to the lower limit frequency of the compressor, of the density of oil in the use of R32 in the refrigeration cycle apparatus 100 designed for R410A to that in the use of R410A. In Fig. 8, the axis of abscissas represents the refrigerant saturation temperature and the axis of ordinates represents the ratio of the density of a refrigerating machine oil for R32 to the density of a refrigerating machine oil for R41 OA.
A refrigerant saturation temperature of -20 degrees C, serving as an evaporating temperature in the heating operation, is a condition where the ZP velocity is high and good oil returnability is difficult to achieve, as in Embodiments 1 and 2. The ratio of the density of a refrigerating machine oil for R32 to the density of a refrigerating machine oil for R410A is accordingly set to substantially 72% or lower, thus ensuring good oil returnability.
As described above, a low-density refrigerating machine oil is used as a refrigerating machine oil for R32 in the use of R32 in the refrigeration cycle apparatus 100 designed for R410A, thereby setting the density of the refrigerating machine oil at which the ZP velocity is achieved. This can ensure good oil returnability of the refrigerating machine oil.

Embodiment 4

In Embodiment 1, in the use of R32 in the refrigeration cycle apparatus 100 designed for the R410A refrigerant, the same refrigerating machine oil is used and the lower limit rotation speed of the compressor 1 is determined. According to Embodiment 4, ether oil is used as a refrigerating machine oil in the use of R410A, ester oil is used as a refrigerating machine oil in the use of R32, and the lower limit frequency of the compressor 1 and the lower limit volume flow rate in the compressor 1 are determined in the use of R32. Other calculation conditions are the same as those in Embodiment 1.

For example, ether oil having a density of 936.9 [kg/m$^3$] at one atmosphere pressure and a temperature of 15 degrees Celsius is used for R410A and ester oil having a density of 947 [kg/m$^3$] at one atmosphere pressure and a temperature of 15 degrees Celsius is used for R32.

The reason why the refrigerating machine oil used for R32 is ester oil is because ester oil has a viscosity and density close to those of ether oil but has a higher two-phase separation temperature than ether oil and accordingly reduces a likelihood that two-phase separation may occur in a refrigerant container, such as an accumulator.

In other words, the oil returnability of ester oil is higher than that of ether oil, thus improving the reliability of the refrigeration cycle.

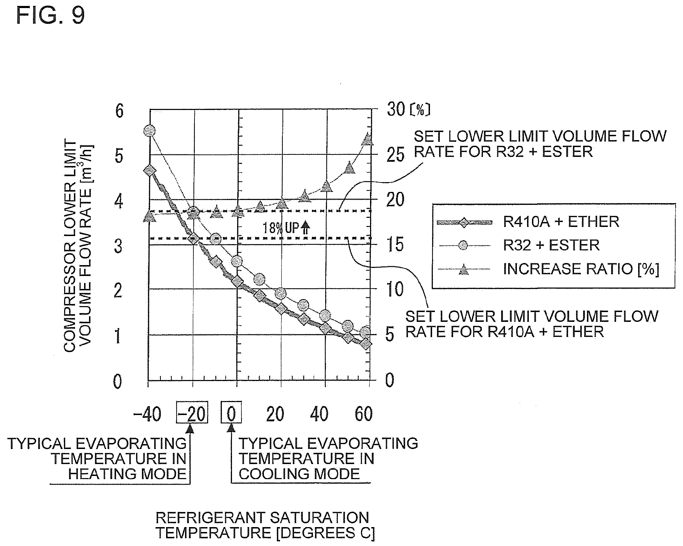

Fig. 9 illustrates the results of calculation of the lower limit volume flow rate in the compressor 1 associated with the ZP velocity relative to the refrigerant saturation temperature. The calculation was performed by using Expressions (1) to (5) described above. Fig. 9 also depicts the ratio of an increase in lower limit volume flow rate in the compressor 1 in the use of R32 to that in the use of R41 OA at each refrigerant saturation temperature.

In evaluation based on the relationship between the refrigerant saturation temperature and the lower limit volume flow rate in the compressor 1 associated with the ZP velocity of each of R41 OA and R32 in Fig. 9, the lower limit volume flow rate in the use of R32 is higher than that in the use of R41 OA by approximately 18% at an evaporating temperature of -20 degrees C in the heating operation, as is obvious from Fig. 9.

As described above, the lower limit frequency of the compressor 1, that is, the lower limit volume flow rate in the compressor 1 is set so as to increase in the heating operation, thereby controlling the displacement of the compressor 1. If the density of gas refrigerant is changed from the density of gas refrigerant of R41 OA to that of R32, this control allows the gas refrigerant velocity in the suction gas pipe of the compressor to be maintained at or above the ZP velocity so that the volume flow rate through the gas pipe is increased, thus ensuring good oil returnability of the refrigerating machine oil.

Reference Signs List

1: compressor; 2: outdoor heat exchanger; 3: expansion valve; 5: liquid pipe; 6: indoor heat exchanger; 7: gas pipe; 8: four-way valve; 9: accumulator; 31: outdoor fan; 32: indoor fan; 41: discharge temperature sensor; 50: control board; 61: outdoor unit; 62: indoor unit; and 100: refrigeration cycle apparatus.

**Claims**

1. A refrigeration cycle apparatus including a variable displacement compressor and pipes designed for R410A, the apparatus setting a heating-mode lower limit refrigerant volume flow rate in the compressor, the heating-mode lower limit refrigerant volume flow rate being a lower limit of a volume flow rate in a heating operation, the apparatus controlling a rotation speed of the compressor such that the volume flow rate in the heating operation is greater than or equal to the heating-mode lower limit refrigerant volume flow rate, the heating-mode lower limit refrigerant volume flow rate including a first lower limit for use of R41 OA refrigerant and a second lower limit for use of R32 refrigerant in the refrigeration cycle apparatus designed for the R410A refrigerant, the second lower limit being greater than the first lower limit, and in the heating operation in the use of the R32 refrigerant in the refrigeration cycle apparatus designed for the R410A refrigerant, the apparatus performing correction such that a lower limit is increased from the first lower limit to the second lower limit to control the rotation speed of the compressor.

2. The refrigeration cycle apparatus of claim 1, wherein the heating-mode lower limit refrigerant volume flow rate is set by determining a lower limit rotation speed of the compressor.

3. The refrigeration cycle apparatus of claim 1 or 2, wherein the heating-mode lower limit refrigerant volume flow rate is set in an upward gas pipe.

4. The refrigeration cycle apparatus of any one of claims 1 to 3, wherein the apparatus uses refrigerating machine oil, the refrigerating machine oil in the use of the R32 refrigerant has a density identical to that in the use of the R410A refrigerant, and the second lower limit is higher than the first lower limit by 17% or more.

5. The refrigeration cycle apparatus of any one of claims 1 to 3, wherein the apparatus uses a refrigerating machine oil such that a density of a mixture of the R32 refrigerant and a refrigerating machine oil is greater than or equal to 90% and less than or equal to 110% of a density of a mixture of the R410A refrigerant and a refrigerating machine oil, and the second lower limit is higher than the first lower limit by an amount in a range of 11% to 24%.

6. The refrigeration cycle apparatus of any one of claims 1 to 5, wherein the apparatus uses ether oil as a refrigerating machine oil in the use of the R410A refrigerant and uses ester oil as a refrigerating machine oil in the use of the R32 refrigerant.

7. A method of operating a refrigeration cycle apparatus that includes a variable displacement compressor, a condenser, an expansion valve, and an evaporator and that is designed for R410A refrigerant, the method comprising:

setting a heating-mode lower limit refrigerant volume flow rate in the compressor, the heating-mode lower limit refrigerant volume flow rate being a lower limit of a volume flow rate in a heating operation;
controlling a rotation speed of the compressor such that the volume flow rate in the heating operation is greater than or equal to the heating-mode lower limit refrigerant volume flow rate, the heating-mode lower limit refrigerant volume flow rate including a first lower limit for use of the R41 OA refrigerant and a second lower limit for use of R32 refrigerant in the refrigeration cycle apparatus designed for the R410A refrigerant, the second lower limit being greater than the first lower limit; and
in the heating operation in the use of the R32 refrigerant in the refrigeration cycle apparatus designed for the R410A refrigerant, performing correction such that a lower limit is increased from the first lower limit to the second lower limit to control the rotation speed of the compressor.

FIG. 1

FIG. 2

FIG. 3

FIG. 4

FIG. 5

| PIPE OUTSIDE DIAMETER | LIQUID PIPE | DISCHARGE PIPE | GAS PIPE | SUCTION PIPE |
|---|---|---|---|---|
| | 9.52 | 12.7 | 15.88 | 19.1 |

PIPE DIAMETER [mm]

▦ R410A  ▨ R32

FIG. 6

REFRIGERANT SATURATION TEMPERATURE [DEGREES C]

FIG. 7

RATIO OF INCREASE IN LOWER LIMIT FREQUENCY
IN USE OF R32 TO THAT IN USE OF R410A [%]

RATIO OF DENSITY OF MIXTURE OF R32 AND REFRIGERATING
MACHINE OIL TO DENSITY OF MIXTURE OF R410A AND
REFRIGERATING MACHINE OIL [%]

FIG. 8

REFRIGERANT SATURATION
TEMPERATURE [DEGREES C]

## FIG. 9

# EP 3 006 859 A1

| INTERNATIONAL SEARCH REPORT | | International application No. |
|---|---|---|
| | | PCT/JP2013/065643 |

**A. CLASSIFICATION OF SUBJECT MATTER**
*F25B1/00*(2006.01)i, *F25B45/00*(2006.01)i

According to International Patent Classification (IPC) or to both national classification and IPC

**B. FIELDS SEARCHED**

Minimum documentation searched (classification system followed by classification symbols)
F25B1/00, F25B45/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-249410 A  (Daikin Industries, Ltd.), 14 September 2000 (14.09.2000), paragraphs [0023], [0025] (Family: none) | 1-7 |
| Y | JP 2001-272117 A  (Mitsubishi Electric Corp.), 05 October 2001 (05.10.2001), paragraphs [0018] to [0025] (Family: none) | 1-7 |
| Y | JP 2011-242048 A  (Mitsubishi Electric Corp.), 01 December 2011 (01.12.2011), paragraph [0038]; fig. 8 (Family: none) | 1-7 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 August, 2013 (28.08.13) | 10 September, 2013 (10.09.13) |

| Name and mailing address of the ISA/ Japanese Patent Office | Authorized officer |
|---|---|
| | |
| Facsimile No. | Telephone No. |

Form PCT/ISA/210 (second sheet) (July 2009)

**INTERNATIONAL SEARCH REPORT**

International application No.

PCT/JP2013/065643

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2004-116885 A  (Mitsubishi Electric Corp.),<br>15 April 2004 (15.04.2004),<br>paragraph [0056]<br>(Family: none) | 4-6 |
| A | JP 2003-262418 A  (Mitsubishi Electric Corp.),<br>19 September 2003 (19.09.2003),<br>paragraph [0024]<br>(Family: none) | 5 |
| A | WO 2013/046822 A1  (Hitachi, Ltd.),<br>04 April 2013 (04.04.2013),<br>paragraph [0084]<br>& JP 2013-76533 A | 1-7 |

Form PCT/ISA/210 (continuation of second sheet) (July 2009)

**EP 3 006 859 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001272117 A